# FASCICULE DE BREVET EUROPEEN

(11) **EP 2 929 619 B1**
(45) Date de publication et mention de la délivrance du brevet: **23.03.2022**
(21) Numéro de dépôt: 13815042.0
(22) Date de dépôt: 04.12.2013
(51) Int. Cl.: H02K 5/15, H02K 5/00

(54) **MONTAGE D'UN CORPS DE STATOR DANS UN PALIER D'UNE MACHINE ÉLECTRIQUE TOURNANTE ET MACHINE ÉLECTRIQUE TOURNANTE COMPORTANT UN TEL MONTAGE**
HALTERUNG EINES STATORKÖRPERS IN EINEM LAGER EINER ELEKTRISCHEN DREHMASCHINE UND ELEKTRISCHE DREHMASCHINE MIT SOLCH EINER HALTERUNG
MOUNTING OF A STATOR BODY IN A BEARING OF A ROTATING ELECTRIC MACHINE AND ROTATING ELECTRIC MACHINE COMPRISING SUCH A MOUNTING

(30) Priorité: 07.12.2012 FR 1261752
(43) Date de publication de la demande: 14.10.2015
(73) Titulaire: Valeo Equipements Electriques Moteur, 94046 Créteil Cedex (FR)
(72) Inventeur: BONNICI, Matthieu, F-94700 Maisons-Alfort (FR); PALLESCHI, Frédéric, F-94320 Thiais (FR); PENTECOTE, Delphine, F-94046 Creteil Cedex (FR)
(74) Mandataire: Valeo Powertrain Systems
(86) Numéro de dépôt international: PCT/FR2013/052935
(87) Numéro de publication internationale: WO 2014/087098

(56) Documents cités:
- EP-A1- 2 113 663
- EP-A2- 1 833 139
- CN-B- 102 306 983
- CN-U- 202 206 263
- JP-A- 2001 319 765
- US-A- 5 075 585
- US-A1- 2001 024 071

## Description

### Domaine de l'invention

La présente invention concerne un montage d'un corps de stator dans une portée interne cylindrique de réception d'une jupe d'un flasque, appelé palier, d'une machine électrique tournante, telle qu'un alternateur et/ou un alterno-démarreur de véhicule automobile.

La présente invention concerne également une telle machine électrique tournante équipée d'un tel montage.

### Etat de la technique

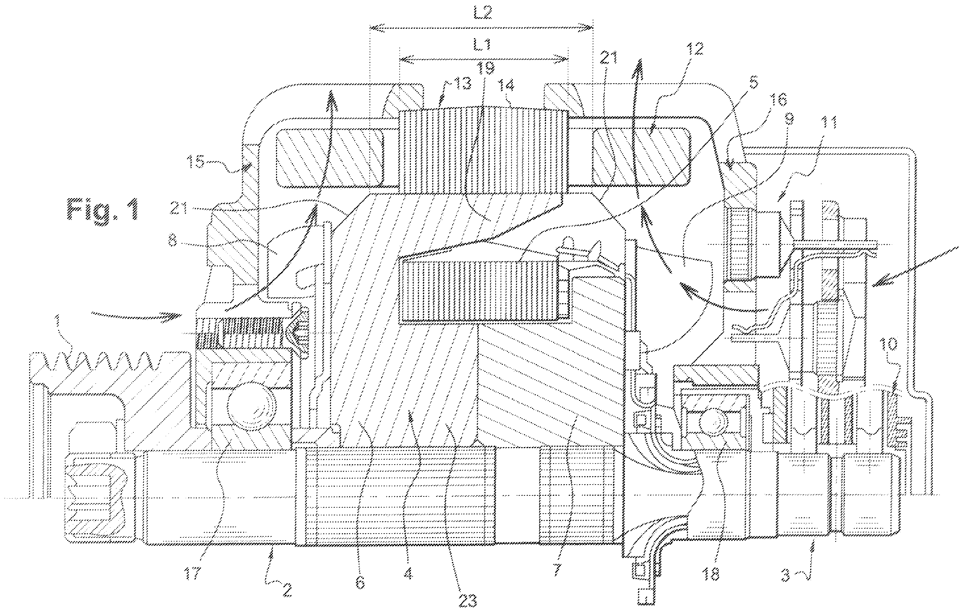

Un tel stator, un tel palier et une telle machine électrique tournante sont divulgués à titre d'exemple dans la figure 1, qui est une demi vue en coupe axiale d'un alternateur polyphasé à ventilation interne de véhicule automobile à moteur thermique identique à celle du document FR 2 918 815 auquel on se reportera pour plus de précisions.

Cet alternateur comporte un carter portant un stator 13 entourant un rotor 4 solidaire d'un arbre 2 monté rotatif dans le carter, qui comporte au moins un flasque avant, appelé palier avant 15, et un flasque arrière, appelé palier arrière 16.

Ces paliers 15, 16 sont métalliques. Ils sont par exemple en Aluminium et portent chacun centralement, à la faveur d'un logement, un moyen de palier, tel qu'un roulement à billes 17 et 18, pour montage rotatif de l'arbre 2 du rotor 4, dont l'axe constitue l'axe de rotation et de symétrie axiale de l'alternateur.

Les paliers 15, 16 pourront être assemblés entre eux par exemple à l'aide de tirants ou de vis avec apparition d'un jeu entre les paliers. Le carter comporte également au moins une patte de fixation du carter à une partie fixe du véhicule. Ainsi le carter est relié électriquement à la masse du véhicule par l'intermédiaire de ou des pattes de fixation et permet d'évacuer de la chaleur par conduction. Le nombre de tirants ou de vis d'assemblage et le nombre de pattes de fixation des paliers 15, 16 dépend des applications.

Le rotor 4 est de forme annulaire et comporte au moins un bobinage d'excitation 5. Ce rotor 4 pourra (Figure 1) consister en un rotor à griffes et comporter deux roues polaires 6, 7 à griffes, ici en acier ferromagnétique, et un bobinage d'excitation 5 monté entre les roues 6, 7.

L'arbre 2 pourra être assemblé avec les roues polaires 6, 7 par emmanchement à force à la faveur de portions moletées à cet effet.

Le stator 13 comporte un corps 14 de forme annulaire et métallique, ici sous la forme d'un paquet de tôles pour diminuer les courants de Foucault présentant chacune une pluralité d'encoches en correspondance les unes avec les autres. Ce corps 14 porte un bobinage 12 de stator polyphasé, qui traverse le corps 14 à la faveur des encoches de celui-ci et s'étend en saillie de part et d'autre du corps 14 pour former une première extrémité et une deuxième extrémité de bobinage appelées chignons.

Le bobinage 12 pourra comporter des segments conducteurs reliés entre eux par exemple par soudage. En variante le bobinage pourra comporter des fils continus. Ces conducteurs pourront être de section rectangulaire, carrée, polygonale ou ronde. La section des encoches est fonction de celle des conducteurs, qui présentent une âme en matériau électriquement conducteur, généralement du cuivre en variante de l'aluminium, recouverte par au moins une couche électriquement isolante, telle que de l'émail. On prévoit un isolant électrique pour chaque encoche afin d'isoler électriquement le bobinage 12 pour ne pas blesser la couche isolante du bobinage 12 lors du montage de celui-ci dans les encoches du corps 14. Ce bobinage 12 comporte plusieurs enroulements, dont le nombre est fonction du nombre de phases de l'alternateur polyphasé. Chaque phase du stator comporte au moins un enroulement.

Les extrémités du bobinage 5 sont reliées par des liaisons filaires à des bagues collectrices solidaires de l'extrémité arrière de l'arbre 2 et appartenant à un collecteur 3. Des balais (non référencés) sont admis à frotter sur les bagues. Ces balais sont portés par un porte balais 10 solidaire d'un régulateur de tension.

L'extrémité avant de l'arbre 2 pourra porter un organe d'entraînement 1, tel qu'une poulie, appartenant à une transmission de mouvement, telle qu'une transmission à courroies, entre l'arbre 2 et le vilebrequin du moteur thermique du véhicule et c'est la raison pour laquelle le roulement 17 du palier 15 est de plus grand diamètre que le roulement 18 du palier 16. En variante la transmission est à chaînes ou à engrenages.

Les extrémités des enroulements du bobinage 12 sont reliées à un dispositif de redressement de courant 11 alternatif en courant continu. Un capot de protection (non référencé) pourra coiffer le dispositif de redressement 11 en étant est solidaire du palier 16 par exemple par vissage ou encliquetage. En variante le capot de protection pourra être d'un seul tenant avec le palier arrière 16.

Le capot et les paliers 15, 16 sont ici ajourés pour circulation d'un fluide de refroidissement, tel que de l'air, à l'intérieur du carter de la machine. A la figure 1 on a représenté par des flèches le trajet du fluide de refroidissement, ici de l'air, à l'intérieur de l'alternateur et à travers les différentes ouvertures d'entrée d'air et de sortie d'air des palier 15, 16.

Les paliers 15, 16 pourront avoir une forme creuse et comporter chacun un fond, globalement d'orientation transversale par rapport à l'axe de l'arbre 2. Ce fond présente centralement un logement pour le roulement à billes 17, 18 et est prolongé à sa périphérie externe par un rebord globalement d'orientation axiale par rapport à l'axe de l'arbre 2. Ce rebord constitue une jupe. Les fonds des paliers 15, 16 comportent chacun des ouvertures d'entrée d'air dont une est visible à la figure 1. Ces ouvertures ont généralement une forme globalement trapézoïdale. Les rebords en forme de jupe des paliers 15, 16 présentent des ouvertures de sortie d'air dont une est visible à la figure 1. Ces ouvertures ont axialement une forme oblongue et affectent également la périphérie externe du fond du palier concerné pour des raisons de démoulage.

Une circulation de l'air pourra être réalisée à l'aide d'au moins un ventilateur, tel qu'un ventilateur du type centrifuge solidaire du rotor. Ce ventilateur comporte des pales saillantes solidaires d'un flasque fixé sur le rotor, par exemple par soudage par points.

Le rotor 4 pourra porter à chacune de ses extrémités axiales respectivement un ventilateur avant 8 et un ventilateur arrière 9, plus puissant car il doit refroidir le dispositif de redressement de courant 11, ainsi que le régulateur de tension. Ce ventilateur arrière 9, en variante comporte deux ventilateurs superposés pour augmenter le nombre de pales.

Ainsi lorsque le bobinage d'excitation 5 du rotor 4 est alimenté électriquement et que l'arbre du rotor tourne, le rotor est magnétisé avec formation de pôles Nord et Sud et un courant alternatif induit est engendré dans le bobinage 12 du stator 13.

Ce courant induit est redressé en un courant continu par le dispositif de redressement 11 pour notamment recharger la batterie du véhicule et /ou alimenter les consommateurs du réseau de bord du véhicule.

La machine électrique tournante s'échauffe notamment par effet Joule sachant que la résistance du bobinage 5 et du bobinage 12 13 augmente en fonction de la température. La circulation de l'air engendré par la rotation du ou des ventilateurs permet notamment de refroidir les chignons du bobinage 12, le dispositif de redressement de courant 11, les roulements 17, 18, le bobinage 5 et le régulateur de tension.

Le dispositif de redressement de courant 11 pourra être porté par le fond du palier arrière 16 et comporter des diodes montées tête bêche dont le nombre dépend du nombre des enroulements du bobinage 12.

Ce dispositif 11 pourra consister en un pont redresseur qui comporte :
- une pluralité de diodes positives supportées par un support positif métallique destiné à être relié à la borne positive de la batterie ;
- une pluralité de diodes négatives supportées par le fond du palier arrière relié à la masse du véhicule ;
- un connecteur pour relier les queues des diodes aux sorties des phases du stator et isoler le support positif par rapport au palier arrière.

Le connecteur pourra comporter un corps en matière plastique dans lequel sont noyées des traces des liaisons avec les diodes pour formation des bras du pont.

Les roues polaires 6, 7 présentent chacune, comme visible à la figure 2, qui est une vue en perspective du rotor 4 identique à la figure 2 du document FR 2 918 815 précité, un flasque 22 d'orientation transversale portant à sa périphérie externe des griffes. Chaque griffe comporte à sa périphérie interne une partie transversale d'enracinement 20 au flasque 22 et à sa périphérie externe des dents 19 d'orientation axiale et de forme trapézoïdale. Les dents 19 d'une roue 6, 7 sont dirigées vers le flasque de l'autre roue 7,6. Un décalage circonférentiel est réalisé entre les dents des roues, qui sont imbriquées. Des parties chanfreinées 21 relient chaque dent 19 à sa partie d'enracinement 20.

Les flasques 22 présentent chacun intérieurement une surépaisseur annulaire 23. Ces deux surépaisseurs forment un noyau pour le montage du bobinage d'excitation 5 implanté entre les flasques 22. En variante le noyau est monobloc et est distinct des flasques des roues 6, 7.

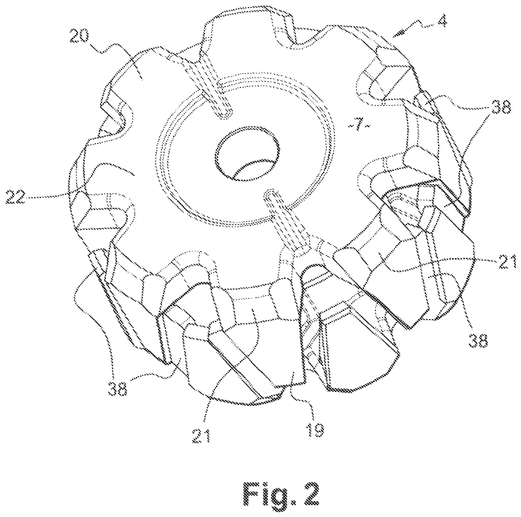

Des aimants permanents 38 pourront être intercalés au moins entre certaines dents 19 pour augmenter la puissance de l'alternateur comme visible à la figure 2.

Lorsque le rotor est magnétisé, de manière connue, chaque dents définie un pôle magnétique Nord ou Sud.

Le nombre d'encoches du corps 14 du stator 13 dépend du nombre de dents 19 et du nombre d'enroulements du bobinage 12.

Ainsi dans le cas d'un alternateur triphasé à 12 pôles, chaque roue 6, 7 comporte six dents 19 et le corps 14 du stator 36 encoches. Dans le cas d'un alternateur hexaphasé chaque roue polaire comporte six dents et le corps du stator 72 encoches. Pour un rotor à 12 pôles et un alternateur du type pentaphasé, le nombre d'encoches sera de 60. Pour un rotor à 14 pôles le corps du stator triphasé comportera 42 encoches. Le rotor pourra comporter 16 pôles comme à la figure 2. Le nombre d'encoches du corps 14 dépend donc des applications.

Un faible entrefer existe entre la périphérie interne du corps 14 du stator 13, et la périphérie externe du rotor 4 constituée par la périphérie externe des dents 19. Dans cette figure la longueur L1 du corps 14 est inférieure à la distance axiale L2 entre les deux extrémités de deux dents adjacentes appartenant chacune à une roue 6, 7. Ces extrémités sont délimitées par les parties chanfreinées 21.

Dans ce document FR 2 918 815 les extrémités axiales du corps 14 du stator sont emmanchées chacune axialement dans une portée interne cylindrique de réception de l'un des rebords des paliers 15, 16 pour évacuer par conduction les calories provenant du corps 14 du stator 13 chauffé par le bobinage 12. Cette évacuation de chaleur n'est pas aussi optimale que souhaitée.

Le document US2001024071 décrit un procédé de fabrication d'un alternateur qui comprend le chauffage du palier avant l'insertion du stator dans ledit palier. La méthode de chauffage et la surface du roulement chauffée ne sont pas mentionnées.

Les documents JP2001319765 et CN102306983B mentionnent le chauffage par induction dans un contexte similaire de montage d'une machine électrique.

Il peut être souhaitable d'améliorer encore l'évacuation des calories

### Objet de l'invention

La présente invention a pour objet de répondre à ce souhait.

L'invention a donc pour but d'évacuer de manière optimale les calories du stator par l'intermédiaire du carter de la machine électrique tournante. Selon l'invention un montage d'un corps de stator dans une portée interne cylindrique de réception d'une jupe d'un palier d'une machine électrique tournante, telle qu'un alternateur ou un alterno-démarreur de véhicule automobile, est caractérisé en ce que l'on chauffe localement la portée interne de la jupe par induction avant montage du corps équipé de son bobinage dans la jupe. Grâce à l'invention on obtient un chauffage local rapide efficace énergétique, reproductible et compacte. Ce chauffage localisé est sans contact avec la source d'énergie et procure une sécurité pour les opérateurs tout en étant économique, énergétique et d'intégration facile dans les lignes de production. Ce chauffage par induction est par définition du type électromagnétique. En outre cela ménage les roulements à billes de support de l'arbre du rotor ainsi que le fond du palier, notamment le logement de montage du roulement à billes associé à l'arbre du rotor. De plus la jupe du palier pourra être extérieurement de forme cylindrique ou de forme tronconique.

Suivant l'invention une machine électrique tournante est caractérisée en ce qu'elle comporte un palier doté d'une portée interne cylindrique de réception du corps du stator avec un montage de corps de stator selon l'invention.

Ainsi la portée interne est dilatée localement par induction pour réception d'un corps de stator.

Selon d'autres caractéristiques procurant d'autres avantages et prises isolément ou en combinaison :
- Le chauffage par induction est réalisé par un solénoïde, qui présente au moins une spire, entourant localement la jupe et ce sans contact de sorte que la jupe baigne dans un champ électromagnétique.
- On chauffe localement par induction la portée interne de la jupe ce qui permet de ménager encore les roulements à billes portant l'arbre du rotor.
- Après chauffage par induction, le serrage entre la portée interne et la périphérie externe du corps du stator est supérieur ou égal à - 0,1 mm de sorte que cela procure un gain thermique au niveau du corps du stator équipé d'un bobinage.
- La portée interne de la jupe est réalisée par enlèvement de matière au niveau de l'extrémité libre de la jupe avec formation d'un épaulement de butée axiale pour le corps du stator.
- La portée interne est formée au niveau de l'extrémité libre de la jupe.
- La longueur axiale de la portée interne est supérieure à la moitié de la longueur axiale du corps du stator pour mieux évacuer la chaleur au niveau de la zone la plus chaude du corps du stator.
- Le palier de montage du corps du stator est associé à un autre palier dotée d'une jupe munie d'une deuxième portée interne de guidage du corps du stator avec présence d'un jeu axial entre les extrémités libres en vis-à-vis des deux paliers.
- La longueur axiale de la deuxième portée de montage est au moins égale à 10 % de la longueur axiale du corps du stator.
- La longueur du corps du stator est comprise entre 26 et 42 mm.
- Le corps du stator est équipé d'un bobinage présentant de part et d'autre du corps du stator des chignons de forme pointue et de longueur comprise entre 15 et 20 mm.
- Le palier comporte une jupe qui présente des traces d'un chauffage par induction.

L'invention sera mieux comprise et d'autres avantages apparaîtrons à la lumière de la description suivante qui n'est donnée qu'à titre indicatif et qui n'a pas pour but de la limiter, accompagnée des dessins joints.

### Brève description des dessins

- la figure 1 est une demi vue en coupe axiale d'une machine électrique tournante de l'art antérieur sous la forme d'un alternateur polyphasé à ventilation interne ;
- la figure 2 est une vue en perspective du rotor de la figure 1, qui pourra être équipé d'aimants permanent ;
- la figure 3 est une vue en perspective du stator monté par frettage dans le palier avant de la machine électrique tournante ;
- la figure 4 est une vue partielle en coupe axiale de la machine électrique équipé du stator monté par frettage dans le palier avant de la machine électrique tournante ;
- la figure 5 est un diagramme montrant le gain thermique en °C (Degré Celsius) du stator de la machine électrique tournante en fonction de la longueur axiale frettée du corps du stator pour un serrage donné entre la périphérie externe du corps du stator et une portée interne de la jupe du palier avant ;
- la figure 6 est un diagramme montrant le gain thermique en °C du stator de la machine électrique tournante en fonction de la valeur du serrage entre la périphérie externe du corps du stator et une portée interne de la jupe du palier avant et ce pour une valeur donnée de la longueur axiale frettée du corps du stator.

### Description d'exemples de réalisation de l'invention

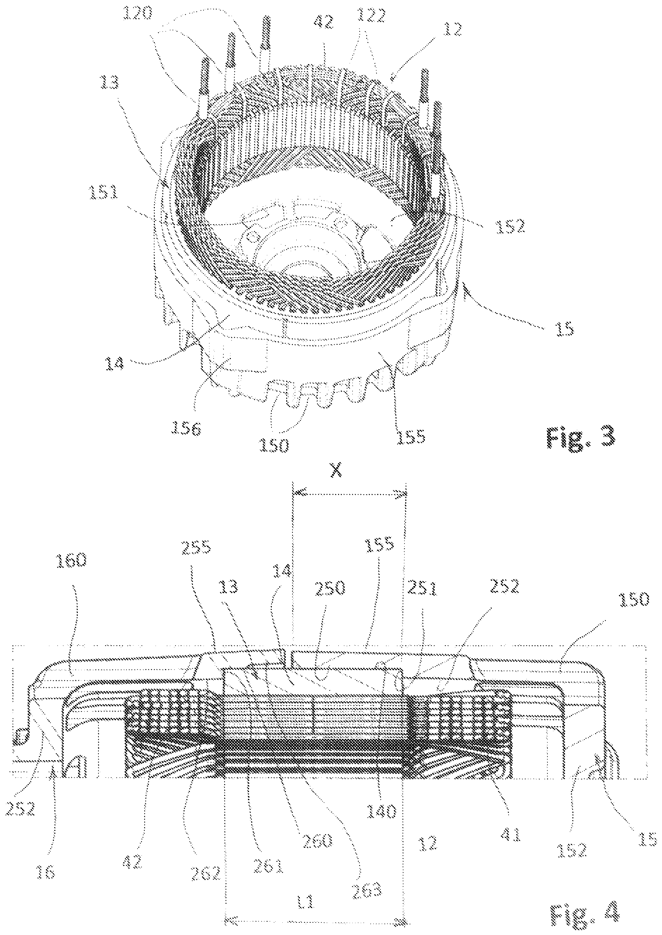

Dans le mode de réalisation des figures 3 et 4 les mêmes références seront utilisées pour les éléments identiques ou similaires à ceux des figures 1 et 2. Les orientations axiale, transversale et radiale seront faites en référence à l'axe de l'arbre 2 de la figure 1. Dans ces figures 3 et 4 le corps 14 du stator 13 est équipé d'un bobinage 12 et est monté par frettage par induction dans une portée interne cylindrique 250 de réception d'une jupe 155 d'un flasque 15, appelé palier, d'une machine électrique tournante, telle qu'un alternateur ou un alterno-démarreur de véhicule automobile.

Le flasque concerné est dans ce mode de réalisation le palier avant 15 du carter de la machine électrique tournante, ici sous la forme d'un alternateur de véhicule automobile.

Plus précisément dans ce mode de réalisation le dispositif de redressement de courant alternatif en courant continu, le régulateur de tension, le porte-balais et le capot sont portés par le palier arrière 16 comme dans les figures 1 et 2. Le bobinage 12, le rotor, la partie centrale des paliers 15, 16 portant les roulements de montage de l'arbre du rotor sont identiques à ceux des figures 1 et 2. Pour ces raisons on a représenté dans les figures 3 et 4 que les éléments nécessaires à la compréhension de l'invention.

Le stator 13 est similaire à celui du document FR 2 918 815 précité. Le palier avant 15, le palier arrière 16 et la périphérie externe 140 du corps 14 du stator 13 équipé du bobinage 12 sont modifiés de manière décrite ci-après.

Ainsi dans ces figures 3 et 4 on voit en 41 le chignon avant et en 42 le chignon arrière du bobinage 12 porté le corps 14 métallique du stator 13 sous la forme d'un paquet de tôles. Le bobinage 12, ici à deux fils en main continus, est du type polyphasé et présente une pluralité de paires de branches latérales destinées à être montées chacune dans une encoche du corps 14 Les encoches pourront être du type semi-ouvert à cales d'encoche comme visible à la figure 4 du document précité FR 2 918 815. Les branches d'une même paire pourront être écartées circonférentiellement d'un pas polaire. Le chignon avant 41 présente une pluralité de têtes de liaison reliant entre elles les premières extrémités de chaque paire de branches latérales, tandis que le chignon arrière 42 présente une pluralité de pieds de raccordement reliant entre elles les deuxièmes extrémités de chaque paire de branches latérales. Les pieds de raccordement sont pour ce faire décalé circonférentiellement par rapport aux têtes de raccordement. Pour plus de précisions sur la configuration du bobinage 12 on se reportera à la demande FR 2 918 815. On rappellera que dans ce type de réalisation l'air passe au travers des chignons 41, 42 de manière satisfaisante pour un bon refroidissement du stator 13, notamment du bobinage 12 de celui-ci, et qu'un bon compromis est trouvé entre la longueur axiale ou hauteur du chignon 41, 42 et la perméabilité du chignon 41, 42. Ces chignons 41, 42 sont de hauteur réduite ce qui permet de réduire la longueur axiale du bobinage 12 et donc la résistance axiale de celui-ci. On peut également faire varier la longueur axiale du corps 14 du stator 13. Pour mémoire on rappellera que dans les alternateurs conventionnels de véhicule automobile le diamètre externe du corps 14 du stator varie entre 110 et 150 mm. Le diamètre externe du rotor varie entre 78 mm et 112 mm. La longueur du corps 14 du stator varie entre 26 mm et 42 mm. Cette variation de la longueur du corps 14 permet de faire varier la puissance de la machine. La longueur du corps 14 dépend de celle de la longueur du bobinage d'excitation du rotor à griffes des figures 1 et 2. Pour les alternateurs de faible puissance la longueur du corps 14 est inférieure à celle du bobinage d'excitation du rotor, le rapport des longueurs étant supérieur ou égal à 0,8. Pour des alternateurs de plus forte puissance la longueur du corps est supérieure à celle du bobinage d'excitation du rotor. Le bobinage 12 pourra présenter des chignons 41, 42 de longueur différente ou égale. Les têtes et les pieds de raccordement pourront être de forme globalement pointue comme visible à la figure 3 et présenter une longueur axiale comprise entre 15 et 20 mm. Ainsi le stator est équipé d'un bobinage 12 traversant le corps 14 du stator à la faveur des encoches de celui-ci et présentant de part et d'autre du corps 14 du stator des chignons 41, 42 de forme pointue, notamment triangulaire, et de longueur comprise entre 15 et 20 mm. Pour plus de précisions on se reportera au document FR 2 918 815. La longueur du corps 14 pourra varier entre 30 et 42 mm. Le rotor 4 pourra comporter 12 pôles (6 pôles par roue polaire) et le corps 14 du stator 72 encoches pour porter six enroulements. En variante le rotor 4 pourra comporter 12 pôles (6 pôles par roue polaire) et le corps du stator 60 encoches pour porter cinq enroulements. Ainsi à la figure 3 on voit 5 sorties de phases 120 de la machine électrique polyphasée et des ligatures 122 de maintien de fils de liaison avec les sorties concernées 120 du chignon 42 destinées à être reliées au connecteur du pont redresseur. Ces sorties traversent le fond 252 du palier arrière 16 à la faveur des ouvertures de sortie d'air 160 de celui -ci. En réalité dans le mode de réalisation de la figure 3 le corps du stator présente 72 encoches et porte 6 sorties, l'une d'en elles étant masquée à la figure 3.

Les ligatures 122 ceinturent localement le chignon 42 et traversent pour ce faire le chignon 42 à la base de celui-ci, c'est-à-dire au niveau de l'extrémité arrière du corps 14. La configuration des pieds du chignon 42 avec des espaces à la base du chignon 42 autorise le passage des ligatures 122. Ces ligatures 122 permettent de rallonger les extrémités des enroulements des phases pour créer des fils de liaisons qui cheminent circonférentiellement le long de l'extrémité libre du chignon arrière 42 afin de placer les sorties 120 au bon endroit comme visible à la figure 3. L'ensemble des ligatures s'étend ici sur moins de 180°. Grâce aux ligatures 122 on positionne les fils de liaisons sur toute la largeur du chignon ce qui permet de réduire l'encombrement axial de la machine électrique tournante ici sous la forme d'un alternateur de véhicule automobile à moteur thermique.

Dans la figure 3 on voit en 151 l'une des ouvertures d'entrée d'air de forme globalement trapézoïdale réalisée dans le fond 152 globalement d'orientation transversale du palier avant 15 métallique et de forme creuse, en 150 l'une des ouvertures de sortie d'air de forme oblongue affectant le rebord 155 globalement d'orientation axiale de ce palier 15 ainsi que la périphérie externe du fond 152.

Ce rebord 155, en forme de jupe, présente des saillies 156, qui délimitent chacune un passage pour un tirant d'assemblage des paliers 15, 16. Les pattes de fixation du palier 15 sur une partie fixe du véhicule ne sont pas visibles dans la figure 3 du fait de la représentation en perspective de cette figure montrant le chignon avant 41 du bobinage 12.

A la figure 4 on a référencé en 252 le fond d'orientation transversale du palier 16, en 255 le rebord en forme de jupe de ce palier 16. Les paliers 15, 16 pourront être en Aluminium. Les rebords 155, 255 sont de manière précitée en forme de jupe.

Dans ces figures 3 et 4 on voit que la périphérie externe du palier avant 15 et que la périphérie externe 140 du corps 14 sont modifiées.

Plus précisément le corps 14, de forme annulaire, présente à sa périphérie externe 140 une forme cylindrique. Le reste du corps 14 est inchangé. Le palier 15 est modifié au niveau de son rebord en forme de jupe 155, qui est plus longue que celle de la figure 1. Le reste du palier 15 est inchangé.

La jupe 155 présente intérieurement une portée interne cylindrique 250 de réception du corps 14 du stator. Cette portée 250 reçoit l'une des extrémités axiale du corps 14, ici l'extrémité axiale avant, et est de grande longueur. Plus précisément on réalise intérieurement un enlèvement de matière au niveau de l'extrémité libre de la jupe 155 pour formation de la portée cylindrique 250. Cet enlèvement de matière conduit à un changement de diamètre interne de la jupe 155 avec formation d'un épaulement 251 d'orientation transversale. Dans ce mode de réalisation la périphérie interne de la jupe 155 présente ainsi une portée cylindriques 250 de plus grand diamètre qu'une autre portée 252 globalement d'orientation axiale. Les portées 250, 252 sont séparées l'une de l'autre par l'épaulement 251. La portée cylindrique 250 appartient à l'extrémité libre de la jupe 155, tandis que la portée 252 est plus proche du fond 152. La portée 252 est inclinée axialement. Elle s'évase en direction de l'extrémité libre de la jupe 155 et du palier arrière 16.

Selon une caractéristique la portée 250 est une portée interne cylindrique de réception de la périphérie externe cylindrique 140 du noyau 14 et l'épaulement 251 constitue une butée axiale pour l'extrémité axiale avant du noyau 14 inséré dans la jupe 155. La portée 250 est une portée de frettage par induction pour montage par frettage de la périphérie externe 140 du noyau 14 de manière décrite ci-après.

Le palier 16 est à l'image du palier 15 et présente donc à la périphérie interne de sa jupe 255 une portée interne cylindrique 260 de réception de l'autre extrémité axiale du noyau 14, ici l'extrémité arrière, séparée d'une portée 262, de plus petit diamètre inclinée et évasée en direction du palier 15, par un épaulement d'orientation transversale 261 formant une butée axiale pour l'extrémité arrière du corps 14 du stator. La portée 260 est une portée cylindrique interne de réception de la périphérie externe 140 de l'extrémité arrière du noyau 14 et l'épaulement 261 constitue une butée axiale pour l'extrémité axiale arrière du noyau 14 inséré dans la jupe 255.

Cette portée 260 est plus courte axialement que la portée 250 et constitue une deuxième portée cylindrique interne de guidage du noyau 14. Tel quel visible à la figure 4 la portée 260 est prolongée en direction du palier avant par une portée 263 constituant l'extrémité libre du palier arrière 16. Cette portée 263 est évasée en direction du palier avant 15. Elle est inclinée axialement. Le diamètre de cette portée 263 est plus grand que celui de la portée 260 et n'est pas en contact avec la périphérie externe 140 du corps 14 du stator 13, un épaulement (non référencé) séparant les portées 260, 263 l'une de l'autre. La portée 263 permet l'enfilage axial de l'extrémité libre du palier 16 sur le noyau 14 monté par avance dans la jupe 155 du palier 15. La portée 260 est une portée de guidage de l'extrémité arrière du corps 14. Le noyau pourra être emmanché à jeu de montage dans la portée 260.

Dans ce mode de réalisation la portée 250 est plus longue axialement que la somme des longueurs axiales des portées 260, 263.

L'une au moins des portées 262, 263, 252 pourra présenter en variante une forme cylindrique.

Les périphéries externes de ces jupes 155, 255 sont dans ce mode de réalisation de forme tronconique tournées l'une vers l'autre. En variante les périphéries externes des jupes 155, 255 pourront être de forme cylindrique.

La jupe 255 (Figure 4) est plus courte axialement que la jupe 155. Un jeu axial existe, comme à la figure 1, entre les extrémités libres en vis-à-vis des jupes 155, 255.

Le palier arrière 16 est emmanché sur le corps 14 monté par avance dans le palier avant 15. Le mouvement axial du palier arrière 16 par rapport au corps 14 est limité par l'épaulement 261, tandis que le mouvement axial du palier avant 15 par rapport au corps 14 est limité par l'épaulement 251.

Le corps 14 métallique est monté dans la portée interne cylindrique d'extrémité 250 du palier avant 15 métallique faisant office de dissipateur de chaleur. Ainsi qu'on le sait le palier 15 est plus froid que le noyau 14 lorsque l'alternateur débite du courant via son stator 13. Le palier 15 peut ainsi bien évacuer conduction thermique la chaleur du noyau 14 chauffé par le bobinage 12. Ce palier avant 15 est également plus froid que le palier arrière 16, qui porte le dispositif de redressement de courant alternatif en courant continu, le régulateur de tension et le porte-balais de sorte qu'il est plus chaud.

Le montage du corps 14 dans la portée 250 est, selon une caractéristique, réalisé par frettage avec chauffage local par induction de la jupe 155 avant montage du corps 14. Plus précisément la jupe 155 du palier avant 15 est configurée pour réaliser une frette pour le corps 14 à la faveur de la portée interne cylindrique 250.

Selon une caractéristique on chauffe localement le palier avant 15 en chauffant la jupe 155 de celui-ci, qui se dilate de sorte que le diamètre de la portée 250 augmente permettant ainsi le montage du corps 14 et du stator 13 dans la portée 250 du palier avant 15.

Selon l'invention ce chauffage local est réalisé au niveau de la portée interne 250.

Après le palier avant 15 se contracte au niveau de sa jupe 155. Le palier 15, par exemple en Aluminium, fait office de dissipateur de chaleur après frettage.

Selon l'invention le chauffage de la jupe 155 du palier avant 15 est, réalisé par induction.

Ce type de chauffage présente de nombreux avantages : rapidité, efficacité énergétique, reproductibilité, compacité, chauffage localisé sans contact avec la source d'énergie, sécurité des opérateurs, économie énergétique, intégration facile dans les lignes de production. Ce type de chauffage repose sur l'induction électromagnétique.

Plus précisément dans ce mode de réalisation selon une caractéristique on chauffe localement la jupe 155 par induction pour ne pas endommager notamment le logement du roulement à billes de la figure 1.

Dans un mode de réalisation le chauffage est réalisé par un solénoïde, qui présente au moins une spire, de préférence au moins deux spires, entourant la jupe 155 notamment au niveau de la portée 250 et ce sans contact de sorte que la jupe baigne dans un champ électromagnétique. L'énergie se dissipe ainsi à l'intérieur de la jupe, notamment au niveau de la portée 250, sous forme de chaleur. Le nombre de spires du solénoïde dépend de la longueur de la portée 250 de la jupe 155.

Ainsi le diamètre de la portée 250 pourra être initialement plus faible (inférieur) que le diamètre externe du noyau 14.

Après chauffage le palier avant se contracte de sorte qu'un serrage de la portée 250 sur la périphérie externe 140 du corps 14 se produit. Le palier 15, par exemple en Aluminium, fait office de dissipateur de chaleur après frettage. L'évacuation de la chaleur est réalisée principalement par conduction du fait du serrage de la portée 250 sur la périphérie externe 140 du corps 14.

Dans un autre mode de réalisation un faible jeu résiduel peut exister entre la périphérie externe 140 du corps 14 et la portée 250. Plus précisément le chauffage par induction de la jupe 155 permet de monter aisément le palier 15 sur le corps 14 sans risque de coincement lorsque la portée 250 est de grande longueur. L'évacuation de la chaleur est réalisée en partie par conduction du fait du contact de l'extrémité axiale concernée du corps 14 avec l'épaulement 251 et par convexion du fait du faible jeu entre la portée 250 et la périphérie externe 140 du corps 14.

Ainsi dans tous les cas, selon une caractéristique la longueur axiale X de la portée 250 pourra être supérieure à la moitié de la longueur axiale L1 du corps 14.

La longueur axiale de la portée 250 pourra être de 2/3 de celle de la longueur axiale L1 du corps 14.

La longueur axiale de la portée 250 pourra être comprise entre la moitié et 2/3 de celle de la longueur L1 du corps 14 du stator.

Ainsi pour un corps 14 de longueur comprise entre 26 et 42 mm la longueur minimale de la portée 250 sera de 13 mm pour un corps de longueur 26 mm et de 21 mm pour un corps 14 de longueur 42 mm.

La longueur maximale de la portée 250 sera de 17,3 mm pour un corps de longueur 26 mm et de 28 mm pour un corps 14 de longueur 42 mm.

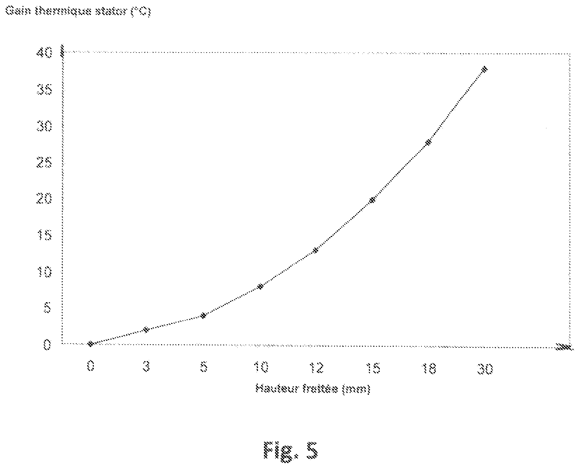

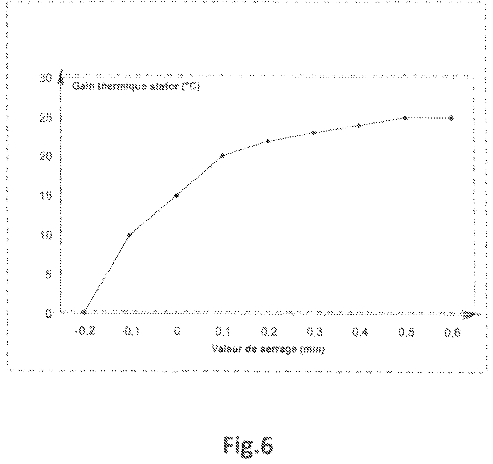

Pour un corps 14 de longueur 30 mm, comme dans les figures 5 et 6, la longueur minimale de la portée 250 sera de 15 mm et la longueur maximale de la portée 250 de 20 mm.

En pratique on prévoit un chanfrein d'entrée au niveau de l'extrémité libre de la portée 250 comme visible en pointillés à la figure 4.

Dans cette exemple la distance axiale entre l'épaulement 251 et l'extrémité libre de la jupe 155 est de 20 mm, la longueur axiale de la portée 250 étant de 18, 5 mm et celle du chanfrein de 1,5 mm.

Un jeu de 2 mm existe entre les extrémités libres des jupes 155, 225 des paliers 15, 16.

La longueur axiale de la somme des portées 260 et 263 est donc égale à 8mm.

Suivant une caractéristique la longueur axiale de la portée 260 est au moins égale à 10% de la longueur axiale L1 du corps 14.

Ainsi pour un corps 14 de 30 mm la longueur axiale minimale de la portée 260 est de 3 mm

Dans tous les cas le contact du palier métallique 15 avec le corps métallique 14 se fait préférentiellement sur la zone la plus chaude du paquet de tôles 14, qui est localisée au milieu de la longueur du paquet de tôles, c'est-à-dire sur la zone la plus saturée du point de vue magnétique et non refroidie sur une machine électrique tournante dont les paliers avant et arrière sont assemblées de manière conventionnelle sans frettage.

Comme visible à la figure 5, pour un serrage donné entre le stator 13 et le palier 15, plus précisément entre la portée 250 et la périphérie externe 140 du corps 14, la température du stator diminue en fonction de la longueur X de la portée 250 correspondant à la longueur axiale frettée du corps 14.

Pour un corps 14 de longueur 30 mm et une longueur X égale ou supérieure à 15 mm le gain thermique du stator -diminution de la température du stator- est égal au moins à 20° C.

Comme visible à la figure 6 le gain thermique au niveau du stator en fonction de la valeur du serrage entre la portée 250 et la périphérie externe 140 du corps 14 augmente, pour une longueur X de frettage donnée, en fonction du serrage entre la portée 250 et la périphérie externe 140 du corps 14. Il ressort de cette figure qu'avec un jeu résiduel de 0, 1 mm entre la portée 250 et la périphérie externe 140 du corps 14 que le gain thermique est globalement de 10°. Ce gain augmente et est globalement de 15 ° pour un serrage nul. Plus le serrage entre la portée 250 et la périphérie externe 140 de la jupe 155 est important plus le gain thermique est important. Le gain thermique maximum est obtenu pour un serrage de 0, 5 mm.

Bien entendu la présente invention n'est pas limitée aux exemples de réalisations décrits.

Ainsi les ligatures 122 pourront être remplacées par un ligaturage du type de celui décrit dans le document GB1 300 215 auquel on se reportera. Bien entendu ce ligaturage s'étendra sur moins de 360° en fonction de la position angulaire des sorties 120.

Dans un mode réalisation le bobinage d'excitation 5 pourra être fixe, l'alternateur étant sans balais et sans bague collectrice comme décrit par exemple dans le document US 2 928 963 auquel on se reportera.

A la lumière de ce document US 2 928 963 il ressort qu'en variante les sorties 120 des phases pourront être implantées dans le palier avant et être raccordés à des terminaux traversant le palier avant pour être raccordés par des câble à un module contenant le dispositif de redressement de courant. Les extrémités du bobinage d'excitation pourront être implantées dans le palier arrière. Le palier avant pourra être doté de sortie d'air.

Bien entendu, compte tenu de ce document US 2 928 963, en variante le dispositif de redressement de courant 11 pourra être porté par le palier avant. Il en est de même du régulateur de tension.

Bien entendu il ressort de ce document US 2 928 963 et de la demande FR 2 820 896 que le bobinage 12 pourra comporter des éléments électriquement conducteurs par exemple en forme de U à extrémité vrillées pour connexion par exemple par soudage des éléments conducteurs. Ainsi il pourra être prévu deux éléments conducteurs par encoche ou au moins quatre éléments électriquement conducteurs par encoche comme décrit dans le document FR 2 820 896 auquel on se reportera. Cela est rendu possible du fait que ce type de bobinage à éléments conducteurs peut présenter des chignons aussi courts et perméables que ceux du bobinage 15 des figures 1 à 4.

En variante le rotor de la machine électrique tournante pourra comporter deux roues polaires à griffes et deux bobinages d'excitation comme décrits dans le document FR 2 857 517.

Toujours en variante, le rotor à griffes est également muni d'une pluralité de paires d'aimants permanents implantées entre les dents des roues polaires comme visible en 38 à la figure 2, le nombre de paires d'aimants pourra être égal ou inférieur au nombres de pôles du rotor à griffes.

En variante le rotor de la machine électrique tournante pourra consister en un rotor à pôles saillants.

Ce rotor à pôles saillants pourra comporter plusieurs bobinages d'excitation enroulés chacun autour d'un tel pôle et montés en série comme visible dans les figures 1 et 2 du document WO 02/054566.

A la lumière de ce document on voit qu'en variante ce rotor à pôles saillants pourra comporter également des aimants permanents.

En variante encore, le palier équipé du dispositif régulateur de tension pourra être refroidi par air tandis que l'autre palier est refroidi par eau.

En variante la machine électrique tournante, qui est un alternateur de véhicule automobile dans les figures précédentes, pourra être équipée d'un dispositif de redressement de courant 11 configuré également pour former un onduleur et comporter par exemple des transistors du type MOSFET pour formation d'un alternateur est réversible qui fonctionne également en mode moteur électrique notamment pour démarrer le moteur thermique du véhicule. Ce type d'alternateur est appelé alterno-démarreur. Pour plus de précisions on se reportera aux documents FR 2 745 445 et FR 2 886 477.

## Revendications

1. Procédé de montage
d'un corps (14) de stator (13) équipé d'un bobinage (12) dans une portée interne (250) d'une jupe (155) d'un palier (15) et dans une deuxième portée interne (260) de guidage d'une jupe (255) d'un autre palier (16) d'une machine électrique tournante, telle qu'un alternateur ou un alterno-démarreur de véhicule automobile, **caractérisé en ce que** l'on chauffe localement la jupe (155) par induction avant montage du corps (14) équipé de son bobinage (12) dans la jupe (155), **en ce que** l'on chauffe localement par induction la portée interne (250) de la jupe (155) et en ce le corps (14) est enfilé axialement dans l'autre palier (16) après le montage du corps (14) dans le palier (15).

2. Procédé de montage selon la revendication 1, **caractérisé en ce que** le chauffage par induction est réalisé par un solénoïde, qui présente au moins une spire, entourant la jupe (155) notamment au niveau de la portée 250 et ce sans contact de sorte que la jupe baigne dans un champ électromagnétique.

3. Procédé de montage selon l'une quelconque des revendications 1 à 2, **caractérisé en ce que** après chauffage par induction, le serrage entre la portée interne (250) et la périphérie externe du corps (14) du stator (13) est supérieur ou égal à -0,1 mm.

4. Procédé de montage selon l'une quelconque des revendications précédentes **caractérisé en ce que** la portée interne (250) est formée par enlèvement de matière avec formation d'un épaulement de butée axiale pour le corps (14) du stator (13).

5. Procédé de montage selon l'une quelconque des revendications précédentes **caractérisé en ce que** la portée interne (250) est formée au niveau de l'extrémité libre de la jupe (155).

6. Procédé de montage selon l'une quelconque des revendications précédentes, **caractérisé en ce que** la longueur axiale (X) de la portée interne (250) est supérieure à la moitié de la longueur axiale (L1) du corps (14) du stator (13).

7. Machine électrique tournante, notamment alternateur ou alterno-démarreur de véhicule automobile, **caractérisée en ce qu'**elle comporte un palier (15) de réception d'un corps (14) de stator (13) associé à un autre palier (16) doté d'une jupe (255) munie d'une deuxième portée interne (260) de guidage du corps (14) du stator (13) le corps de stator étant assemblé selon le procédé de montage selon l'une quelconque des revendications précédentes.

8. Machine selon la revendication 7, **caractérisée en ce qu'**un jeu axial est présent entre les extrémités libres en vis-à-vis des deux paliers (15, 16).

9. Machine selon la revendication 8, **caractérisée en ce que** la longueur axiale de la deuxième portée (260) est au moins égale à 10% de la longueur axiale (L1) du corps du stator.

10. Machine selon l'une quelconque des revendications 7 à 9, **caractérisée en ce que** la longueur axiale (L1) du corps du stator est comprise entre 26 et 42 mm.

11. Machine selon l'une quelconque des revendications 7 à 10 **caractérisée en ce que** le corps du stator est équipé d'un bobinage (12) présentant de part et d'autre du corps du stator des chignons de forme pointue et de longueur comprise entre 15 et 20 mm.

12. Machine selon l'une quelconque des revendications 7 à 11, **caractérisée en ce que** le palier (15) comporte une jupe (155) qui présente des traces d'un chauffage par induction.

## Patentansprüche

1. Verfahren zur Montage eines mit einer Wicklung (12) ausgestatteten Körpers (14) eines Stators (13) in einer inneren Auflagefläche (250) eines Mantels (155) eines Lagers (15) und in einer zweiten inneren Führungsauflagefläche (260) eines Mantels (255) eines anderen Lagers (16) einer rotierenden elektrischen Maschine, wie eines Wechselstromgenerators oder eines Startergenerators eines Kraftfahrzeugs, **dadurch gekennzeichnet, dass** der Mantel (155) vor der Montage des mit seiner Wicklung (12) ausgestatteten Körpers (14) im Mantel (155) lokal induktiv erwärmt wird, dass die innere Auflagefläche (250) des Mantels (155) lokal induktiv erwärmt wird und dass der Körper (14) nach der Montage des Körpers (14) im Lager (15) axial in das andere Lager (16) eingeführt wird.

2. Montageverfahren nach Anspruch 1, **dadurch gekennzeichnet, dass** die induktive Erwärmung durch einen Elektromagneten erfolgt, der mindestens eine Windung aufweist, die den Mantel (155) insbesondere im Bereich der Auflagefläche (250) berührungslos umgibt, so dass sich der Mantel in einem elektromagnetischen Feld befindet.

3. Montageverfahren nach einem der Ansprüche 1 bis 2, **dadurch gekennzeichnet, dass** nach der induktiven Erwärmung die Spannung zwischen der inneren Auflagefläche (250) und dem Außenumfang des Körpers (14) des Stators (13) größer als oder gleich -0,1 mm ist.

4. Montageverfahren nach einem der vorangehenden Ansprüche, **dadurch gekennzeichnet, dass** die innere Auflagefläche (250) durch Materialabtragung und Ausbildung einer axialen Anschlagsschulter für den Körper (14) des Stators (13) ausgebildet ist.

5. Montageverfahren nach einem der vorangehenden Ansprüche, **dadurch gekennzeichnet, dass** die innere Auflagefläche (250) am freien Ende des Mantels (155) ausgebildet ist.

6. Montageverfahren nach einem der vorangehenden Ansprüche, **dadurch gekennzeichnet, dass** die axiale Länge (X) der inneren Auflagefläche (250) mehr als die Hälfte der axialen Länge (L1) des Körpers (14) des Stators (13) beträgt.

7. Rotierende elektrische Maschine, insbesondere Wechselstromgenerator oder Startergenerator eines Kraftfahrzeugs, **dadurch gekennzeichnet, dass** sie ein Lager (15) zur Aufnahme eines Körpers (14) eines Stators (13) aufweist, das mit einem anderen Lager (16) verbunden ist, das mit einem Mantel (255) ausgestattet ist, der mit einer zweiten inneren Auflagefläche (260) zur Führung des Körpers (14) des Stators (13) versehen ist, wobei der Körper des Stators nach dem Montageverfahren nach einem der vorangehenden Ansprüche zusammengebaut ist.

8. Maschine nach Anspruch 7, **dadurch gekennzeichnet, dass** zwischen den einander gegenüberliegenden freien Enden der beiden Lager (15, 16) ein axiales Spiel vorhanden ist.

9. Maschine nach Anspruch 8, **dadurch gekennzeichnet, dass** die axiale Länge der zweiten Auflagefläche (260) mindestens 10 % der axialen Länge (L1) des Körpers des Stators beträgt.

10. Maschine nach einem der Ansprüche 7 bis 9, **dadurch gekennzeichnet, dass** die axiale Länge (L1) des Körpers des Stators zwischen 26 und 42 mm beträgt.

11. Maschine nach einem der Ansprüche 7 bis 10 **dadurch gekennzeichnet, dass** der Körper des Stators mit einer Wicklung (12) ausgestattet ist, die auf beiden Seiten des Körpers des Stators spitz zulaufende Wickelköpfe mit einer Länge zwischen 15 und 20 mm aufweist.

12. Maschine nach einem der Ansprüche 7 bis 11, **dadurch gekennzeichnet, dass** das Lager (15) einen Mantel (155) aufweist, der Spuren einer induktiven Erwärmung aufweist.

## Claims

1. Method for mounting a stator (13) body (14) equipped with a winding (12) in an internal bearing surface (250) of a skirt (155) of a bearing (15) and in a second, guiding internal bearing surface (260) of a skirt (255) of another bearing (16) of a rotary electric machine, such as a motor vehicle alternator or alternator-starter, **characterized in that** the skirt (155) is heated locally by induction before the body (14) equipped with its winding (12) is mounted in the skirt (155), **in that** the internal bearing surface (250) of the skirt (155) is heated locally by induction and **in that** the body (14) is threaded axially into the other bearing (16) after the body (14) is mounted in the bearing (15).

2. Mounting method according to Claim 1, **characterized in that** the induction heating is carried out by a solenoid, which has at least one turn, surrounding the skirt (155) in particular at the bearing surface (250) without contact such that the skirt is immersed in an electromagnetic field.

3. Mounting method according to either one of Claims 1 and 2, **characterized in that** after induction heating, the clamping between the internal bearing surface (250) and the external periphery of the body (14) of the stator (13) is greater than or equal to -0.1 mm.

4. Mounting method according to any one of the preceding claims, **characterized in that** the internal bearing surface (250) is formed by removal of material with formation of an axial stop shoulder for the body (14) of the stator (13) .

5. Mounting method according to any one of the preceding claims, **characterized in that** the internal bearing surface (250) is formed at the free end of the skirt (155).

6. Mounting method according to any one of the preceding claims, **characterized in that** the axial length (X) of the internal bearing surface (250) is greater than half the axial length (L1) of the body (14) of the stator (13) .

7. Rotary electric machine, in particular a motor vehicle alternator or alternator-starter, **characterized in that** it has a bearing (15) for receiving a stator (13) body (14) associated with another bearing (16) provided with a skirt (255) equipped with a second internal bearing surface (260) for guiding the body (14) of the stator (13), the stator body being assembled according to the mounting method according to any one of the preceding claims.

8. Machine according to Claim 7, **characterized in that** an axial clearance is present between the facing free ends of the two bearings (15, 16).

9. Machine according to Claim 8, **characterized in that** the axial length of the second bearing surface (260) is at least equal to 10% of the axial length (L1) of the body of the stator.

10. Machine according to any one of Claims 7 to 9, **characterized in that** the axial length (L1) of the body of the stator is between 26 and 42 mm.

11. Machine according to any one of Claims 7 to 10, **characterized in that** the body of the stator is equipped with a winding (12) that has, on either side of the body of the stator, visible portions of pointed shape and with a length of between 15 and 20 mm.

12. Machine according to any one of Claims 1 to 11, **characterized in that** the bearing (15) has a skirt (155) that has induction heating tracks.
